Europäisches Patentamt

European Patent Office

Office européen des brevets

(11) Publication number: **0 428 043 A2**

## EUROPEAN PATENT APPLICATION

(21) Application number: 90121210.0

(22) Date of filing: 06.11.90

(51) Int. Cl.5: **G02C 5/12**

(30) Priority: **14.11.89 IT 6196189 U**

(43) Date of publication of application:
**22.05.91 Bulletin 91/21**

(84) Designated Contracting States:
**AT CH DE ES FR GB IT LI SE**

(71) Applicant: **SILCON PLASTIC S.r.l.**
**Località Soccampo**
**I-32012 Forno di Zoldo (Belluno)(IT)**

(72) Inventor: **Battistin, Pietro**
**Località Soccampo**
**I-32012 Forno di Zoldo, Bellun(IT)**

(74) Representative: **Piovesana, Paolo**
**Corso del Popolo, 70**
**I-30172 Venezia-Mestre(IT)**

(54) **Anatomical nosepiece for spectacles.**

(57) An anatomical nosepiece for spectacles, comprising an inner core of substantially rigid material and a covering of substabtially soft material, characterised in that the inner score comprises at least three separate substabtially coplanar portions (3,4), namely a transverse portion (3) corresponding to the central portion (1) of the nosepiece and two lateral portions (4) corresponding to the two plates which rest against the nose and are associated with elements (9,12) for their connection to the two circular rims (8) of the frame, the covering (5) being formed as one piece which encloses the three core portions (3,4) and comprises a thickness reduction (13) at the separation regions between adjacent portions.

FIG.1

EP 0 428 043 A2

This invention relates to an anatomical nosepiece ior spectacles.

Spectacle nosepieces, ie the bridge supports provided between the two circular rims of a spectacle frame and lowerly comprising two widened or plate-like portions for resting against the nose, are well known.

There are various types of nosepiece, namely nosepieces formed within the constituent plastics material of the circular rims, or consisting of a simple pair of plates applied to arms or "hooks" fixed to the circular rims, or separate elements of plastics construction applied to the frame. The present invention specifically relates to a nosepiece of this latter type, ie a nosepiece constructed separately from the spectacle frame and then applied to it.

Nosepieces of this type are known, and in particular nosepieces comprising an inner core of substantially rigid material with an outer covering of silicone material, which combines the advantage of softness with the advantage of a certain contact friction with the skin, with the consequent satisfactory stability of the spectacles when worn.

In order to be correctly applied to a corresponding frame crosspiece, the central part of the nosepiece must extend in a transverse direction, whereas to adhere to the nose the plates must extend in a direction substantially inclined to said central part. For this reason the nosepiece must have a "three-dimensional" shape, requiring for its construction a rather complicated mould of consequently high cost.

In addition the presence of the rigid core means that the nosepiece is little adaptable to the person wearing the spectacles, with the result that this type of nosepiece cannot be considered of anatomical type. This limitation has partly been overcome by constructing the core of a deformable metal material and fixing the nosepiece to the frame only at its central point, so that the side plates can be arranged to adapt the nosepice to the wearer for its "personalization". However this method requires a considerable personalisation effort, which is imprecise and almost never gives satisfactory results.

An object of the invention is to obviate these drawbacks by providing a spectacle nosepiece of the aforesaid type which however differs from similar nosepieces by being constructed flat and there:-fore with simpler and hence less costly tooling.

A further object of the invention is to enable the spectacles to be easily and effectively personalized on the basis of the anatomical shape of the nose of the wearer.

These and further objects which will be apparent from the description given hereinafter are attained according to the invention by an anatomical nosepiece for spectacles, comprising an inner core of substantially rigid material and a covering of substantially soft material, characterised in that the inner core comprises at least three separate substantially coplanar portions, namely a transverse portion corresponding to the central portion of the nosepiece and two lateral portions corresponding to the two plates which rest against the nose and are associated with elements for their connection to the two circular rims of the frame, the covering being formed as one piece which encloses the three core portions and comprises a thickness reduction at the separation regions between adjacent portions.

The present invention is further clarified hereinafter with reference to the accompanying drawings in which:

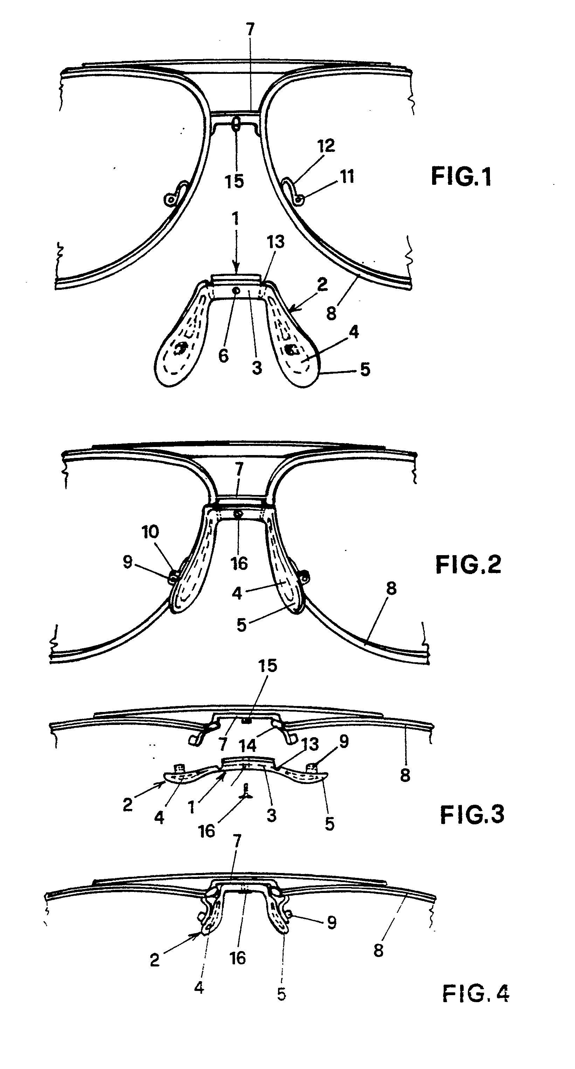

Figure 1 is a perspective view of a nosepiece according to the invention prior to its application to a spectacle frame;

Figure 2 shows it after its application to the frame;

Figure 3 shows it in plan view after being brought close to the frame but before being connected thereto;

Figure 4 shows it in the same view as Figure 3 but after its connection to the frame.

As can be seen from the figures the nosepiece according to the invention, which extends substantially in one plane, comprises a central transverse portion 1 and two lateral portions2 of flat shape and forming the two plates by which the spectacles rest against the nose.

Both the central portion 1 and the lateral portions 2 comprise an inner core 3 and 4, which is separate for the three portions, plus a single outer covering 5.

The inner cores 3 and 4 are constructed of strong substantially rigid material such as nylon, polycarbonate, metal. etc. Of these cores, the central core 3 and the corresponding portion of the covering 5 comprise a through hole 6 for fixing the nosepiece to the bridge of the frame, ie to the crosspiece 7 which connects its two circular rims 8 together. From each lateral portion 4, which is of flat shape, there projects a holed appendix 9 which passes through the covering 5 and through which a screw 10 can be passed to fix it to the head 11 of a support arm or hook 12 welded to the corresponding circular rim 8.

Alternatively the appendices 9 could be fixed to the hooks 12 by snap-fitting in accordance with traditional methods.

The outer covering 5 is preferably of silicone material and completely encloses the three cores 3 and 4, so that they are also joined together at their separation regions.

In these separation regions the covering 5 comprises, on the side from which the holed appendices 9 project, a groove which defines a thickness reduction 13 of the nosepiece, to facilitate articulation between the parts.

To apply the nosepiece according to the invention to a frame, this must be provided with a bridge 7 connecting the two circular rims 8 together, and this bridge must be slightly forward of the plane of the circular rims 8 to define two small steps 14 facing the interior of the frame. In addition a small bush 15 must be welded to the bridge 7 and the two hooks 12 be welded to the two circular rims 8.

The nosepiece according to the invention is applied to the thus formed frame by screws. Of these, a first screw 16 is passed through the transverse portion 1 of the nosepiece to engage in the bush 15. As the screw is tightened and said transverse portion thus approaches the bridge 7, the two steps 14 oppose this approach movement to cause the two lateral portions 2 to rotate relative to the central portion 1, so that said lateral portions assume the correct position for use. This rotation is enabled by the interruption between the cores 3 and 4 and the yieldable nature of the covering 5, and is facilitated by the two thickness reductions 13 in the covering at said steps 14.

The rotation of the two lateral postions 2 of the nosepiece brings the two appendices 9 to face the corresponding heads 11 of the two hooks 12, to which they can be fixed by screws 10.

Individual adjustment of the nosepiece is achieved by deforming the hooks 12.

Basilically, the nosepiece of the invention is based on different principles from those on which traditional nosepiece are based, and compared with these latter is particularly advantageous in that:
- it can be constructed as a flat piece and therefore with low tooling costs;
- for its transformation into a three-dimensional nosepiece it requires no other operation than the traditional one of connecting it to the frame;
- it utilizes the yieldability of silicone material to obtain a special feature, namely the hinging of the lateral portions to the transverse portion, which has neither been foreseen nor used in the past for like purpose;
- it can be easily personalized by simply adjusting the hooks.

**Claims**

1. An anatomical nosepiece for spectacles, comprising an inner core of substantially rigid material and a covering of substabtially soft material, characterised in that the inner core comprises at least three separate substabtially coplanar portions (3,4), namely a transverse portion (3) corresponding to the central portion (1) of the nosepiece and two lateral portions (4) corresponding to the two plates which rest against the nose and are associated with elements (9,12) for their connection to the two circular rims (8) of the frame, the covering (5) being formed as one piece which encloses the three core portions (3,4) and comprises a thickness reduction (13) at the separation regions between adjacent portions.

2. A nosepiece as claimed in claim 1, characterised in that from each lateral portion (4) of the core there projects, from the end distant from the thickness reductions (13), a holed appendix (9) which passes through the corresponding part of the covering (5) to be engaged by a connection element provided at the end of deformable hooks (12) fixed to the circular rims (8).

3. A nosepiece as claimed in claim 1, characterised in that the arrangement of the central portion (1) and of the lateral portions (2) relative to the bridge (7) and circular rims (8) of the frame is such that in fixing said central portion (1) to said bridge (7) mutual interference occurs between said lateral portions (2) and said circular rims (8), with rotation of these latter portions relative to the central portion (1).

4. A nosepiece as claimed in claim 3, characterised in that the covering (5) is of silicone material.

FIG.1

FIG.2

FIG.3

FIG.4

4